# EUROPEAN PATENT SPECIFICATION

(11) **EP 2 667 694 B1**
(45) Date of publication and mention of the grant of the patent: **22.06.2016**
(21) Application number: 12704494.9
(22) Date of filing: 23.01.2012
(51) Int. Cl.: A01C 3/00, A01C 3/02

(54) **A METHOD AND A SYSTEM FOR ADDING ACID TO MANURE IN A MANURE STORAGE TANK**
VERFAHREN UND VORRICHTUNG ZUM BEIMISCHEN VON SÄUERE IN EINEN GÜLLEBEHÄLTER
PROCÉDÉ ET DISPOSITIF POUR AJOUTER DE L' ACIDE DANS UN RÉSERVOIR À LISIER

(30) Priority: 30.01.2011 DK 201100058
(43) Date of publication of application: 04.12.2013
(73) Proprietor: Sørensen, Harry Højvang, 6818 Årre (DK)
(72) Inventor: Sørensen, Harry Højvang, 6818 Årre (DK)
(74) Representative: Kristensen, Martin Hjelm
(86) International application number: PCT/DK2012/000003
(87) International publication number: WO 2012/100774

(56) References cited:
- EP-A2- 2 179 978
- GB-A- 2 349 101
- US-A- 4 645 603

## Description

### Field of invention

The present invention relates to a manure pump for adding and mixing acid into manure present in a manure storage tank.

The present invention also relates to a method for injecting and mixing acid into manure present in a manure storage tank.

### Background of the invention

Manure from animal husbandry contains many components, which are useful as fertilizers. Some of the components are volatile and especially nitrogen compounds are volatile, in particular ammonia. Attempts to reduce volatility of these compounds have been carried out by addition of acid, e.g. sulphuric acid or phosphoric acid, to the manure in order to reduce pH and thereby reduce volatility by solidification or solubilisation of the volatile nitrogen compounds present in the manure, and especially ammonia.

When acid is added and pH is lowered sufficiently, e.g. below 7, e.g between 4-5 and 7 or even below 4-5, the equilibrium between ammonia present in the manure and ammonium ions will be shifted towards ammonium ions, which are present as ions in the liquid phase of the manure. A similar process may occur in respect of other volatile nitrogen compounds present in the manure. Thereby evaporation of nitrogen compounds, which is an important part of the compounds present in the manure which are useful as fertilizers, may be reduced or even eliminated since ammonia and other volatile N-compounds may be kept in the soluble state or are solidified in the manure.

Several attempts have been made to add acid to the manure present in the stable, e.g. in manure present in channels under the floor covering in the stable or during spreading manure on the fields. These systems share high establishment costs and the need for sensitive equipment for controlling acid addition.

However, these techniques do suffer from low efficiency in reaction between the acids and the manure and the accuracy of acid addition is poor even though the equipment is expensive.

Advanced solutions using pumps for acids, pH sensors, flow sensors and controllers, e.g. based on computers have been suggested. These solutions needs to be applied at each stable or at each manure spreader, which increases costs for use of manure as fertilizer even though their efficiency in respect of accuracy and proper mixing of acid and manure is lower than expected when seen in relation to the necessary investments, see e.g. US 6372146 B1.

Other systems for spreading manure which are connected directly to the manure storage tank using tubes or hoses, requires uninterrupted addition of acid in order to work with decentralised acid addition. In practice this is not possible unless manure spreading is stopped during change of acid storage tank or during refilling an acid tank on the manure spreader on which a conventional acid addition system is mounted. This not only prolongs the process of acidifying the manure, it also interrupts the procedure of spreading the manure in the fields.

Since addition of acid to the manure occurs under pressure (through pumps and valves etc.) in the currently available systems discussed above, each system requires frequent and thorough safety checks and specially trained staff to operate the acid addition systems.

It will be desirable to provide a system and a method for addition of acid to manure, which does not suffer from the above mentioned drawbacks.

### Summary of the invention

The present invention has overcome the above mentioned drawbacks related to prior art by providing an acid injection and manure pumping system for injecting and mixing acid into manure present in a manure storage tank by adding acid to the manure while it is pumped through the pumping system. The pumping system comprises an inlet adapted to be positioned near the bottom of manure storage tank and which is connected to a submersible pump, the outlet side of the pump housing being connected to an ejector, through which the manure is ejected into the manure storage tank, the ejector comprising a void space between an outer ejector wall and an inner ejector part, and wherein the inner ejector part provides a manure flow channel through the ejector, the void space being connected to a suction hose by means of a connector, and where openings or holes provide a passage between the void space and the inner ejector part or an ejector tip for sucking acid from an acid storage container through the hose and the void space and into the manure flow path in the ejector.

Another aspect of the invention provides a method for adding acid to manure present in a manure storage tank. The method comprises comprising pumping manure through a manure pumping and acid injection system via an inlet arranged near the bottom of the manure storage tank and ejecting the manure into the storage tank above or near the surface level (19) of the manure in the storage tank, wherein acid is injected into the circulating manure while flowing through an ejector mounted on the pumping system by creating a reduction of the pressure in the manure flowing through the ejector, which creates a vacuum in a void space in the ejector and thereby sucking acid from an acid storage container, through an acid suction hose and into the void space from which it is injected into the manure flowing through the ejector by means of holes or openings and thereby mixing the acid into the manure present in the ejector upon its passage through the ejector before ejecting the manure from the ejector and into the manure storage tank above or near the surface level.

By addition of acid into the manure storage tank rather than on each manure trailer or the like, handling of acid is concentrated at one specified location.

Acid addition can be performed prior to spreading the manure in the fields and the addition of acid can be varied e.g. depending on the amount of manure present in the tank.

Acid addition prior to spreading the manure in the fields will also enable use of other conventional means for spreading manure such as burying manure or spreading via systems requiring tubes or hoses.

The necessary safety precautions may be easily provided in the area in which acid equipment is provided during acid addition to the manure storage tank.

The present invention thus relates to a pump and acidification system which, apart from being used for addition of acid to the manure, is useful for stirring the manure present in the tank and/or for loading manure onto trucks or trailers prior to spreading manure on the fields.

Spreading of manure can be carried out using conventional trucks or trailers, without the need for mounting additional and expensive acid addition and control systems on each trailer or truck.

In one embodiment of the acid injection and manure pumping system an end part of the inner ejector part extends into the ejector tip attached to an outer ejector wall surrounding the void space by an inwardly tapering transition area of the outer wall. Preferably, the openings for adding acid into the manure are formed as an annual gap between an inwardly tapering part of the inner ejector part and the transition area of the outer wall.

In another embodiment of the acid injection and manure pumping system, the ejector comprises an outwardly tapering inner ejector part provided with holes or openings arranged at a distance from an inlet opening of the ejector. Preferably, the holes or openings are arranged to establish a radial inwardly directed flow of acid or a flow of acid, which is parallel to the manure flow direction or at an angle there between. Alternatively, the holes or openings are arranged to establish a flow of acid entering the inner ejector part at an angle in relation to the longitudinal axis of the ejector for establishing a circulating flow pattern.

Acid injection into the causes creation of a significant amount of foam. The above described embodiments provide an ejector design, which at the same time ensure that the amount of foam created during acidification is kept at a controllable level. The creation of foam results in a manure fraction of a lower density when compared to the untreated manure. Thus, the acidified manure will tend to create a layer on top of the untreated manure when it is returned to the manure storage tank 1 and the pumping arrangement will only pump untreated manure into the manure pumping arrangement for mixing with acid until the entire volume of manure has been treated in a very uniform manner.

In yet another embodiment, the pumping means is driven by a motor or a hydraulic or pneumatic actuator system of a tractor or truck.

In yet another embodiment, the acid injection and manure pumping system is mobile and mountable on a tractor or truck or is mounted on a trailer. The use of mobile systems, which can be moved from one manure storage tank to another, e.g. by trained operators, can provide acidification to a large number of manure storage tanks at low costs.

When the acid is added to prior to spreading the manure in the fields, the evaporation of volatile nitrogen compounds can be kept at a low level and the farmer can use his conventional equipment for spreading manure in the fields. In addition, In addition, spreading of acidified manure no longer requires manure spreaders with individual acid addition systems and thus, different types of manure spreaders can be used simultaneously, e.g. systems for spreading manure which are connected directly to the manure storage tank using tubes or hoses can now be used for uninterrupted spreading of the treated (acidified) manure.

### The drawing

The present invention will be described in the following with reference to the drawing, in which
- fig. 1a: shows a manure storage tank in which the pumping arrangement according to the present invention is in use
- fig. 1b: shows an enlarged view of the pumping arrangement,
- fig. 2a: shows a perspective view of a first embodiment of an ejector nozzle in which acid is added to the manure,
- fig. 2b: shows the ejector nozzle in fig. 2a in an end view seen from the outlet of the ejector nozzle,
- fig. 2c: shows the ejector nozzle in fig. 2a in which a part of the outer wall to void space for acid addition is removed cf. lines A-B in fig. 2b,
- fig. 2d: the ejector nozzle in fig. 2a is shown with a view to the interior of the ejector nozzle by a cut-out cf. lines A-B in fig. 2b,
- fig. 2e: the ejector nozzle in fig. 2a is shown in a cross view to the interior of the ejector nozzle by a cut-out cf. line A in fig. 2b,
- fig. 3a: shows another embodiment of the ejector nozzle in an end view seen from the outlet of the ejector nozzle,
- fig. 3b: the ejector nozzle in fig. 2a is shown in a cross view to the interior of the ejector nozzle by a cut-out cf. line A-A in fig. 3a,
- fig. 3c: shows an enlarged view of the details in circle C in fig. 2b,
- fig. 3d: shows a perspective view of the second embodiment of the ejector nozzle in which acid is added to the manure, and
- fig. 3e: the ejector nozzle in fig. 3a-3c is shown with a view to the interior of the ejector nozzle by a cut-out cf. lines A-B in fig. 3a.

### Detailed description

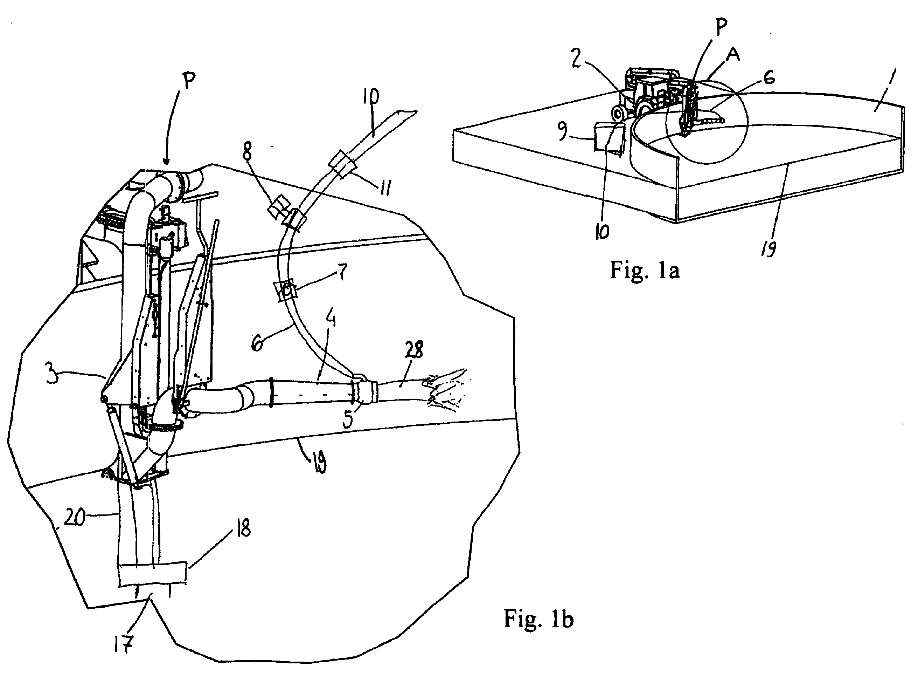

Fig. 1a shows the manure pumping arrangement P in position for pumping manure through the pumping arrangement in order to add acid to the manure present in the manure storage tank 1.

The manure pumping arrangement may be stationary and the means for driving the pumping arrangement may provided by a motor (not shown) or by a tractor 2.

Alternatively, the manure pumping arrangement is a mobile unit and the driving means will preferably be a hydraulic or pneumatic actuator system on a tractor 2 or truck. The tractor 2 will, in addition to providing driving means for the manure pumping arrangement P, also provides transportation means for the mobile manure pumping arrangement P. The mobile manure pumping arrangement P may be attached to the tractor 2 as illustrated in fig. 1a or may, alternatively, be mounted on a separate trailer which may also comprises a storage container for acid.

The manure pumping arrangement P comprises a manure pump 3 having an inlet 17, which is submersible into the manure in the manure storage tank 1. Preferably, the inlet 17 of the manure pump 3 is provided near the bottom of the manure storage tank 1 when in position for pumping.

As shown in fig. 1 b, the manure pump 3 may be at least partly submerged below the surface 19 of the manure in the manure storage tank 1 in order to arrange the inlet 17 of the pumping arrangement P near the bottom of the manure storage tank 1. The manure pump 3 sucks manure from the bottom of the manure storage tank 1 by means of conventional pumping means arranged in a submersible pump housing 18.

The manure is pumped through a pipe or tube 20 to a nozzle 4 on which an ejector 5 is attached. The nozzle 4 and the ejector 5 are preferably positioned above the surface level 19 of the manure in the manure storage tank 1.

In order to be able to position the inlet 17 near the bottom of the manure storage tank, the length of the pipe between the inlet 17 and the pump submersible housing 18 may be adjustable in conventional manner. Alternatively, the nozzle 4 and the ejector 5 may be arranged on a pipe, which can be positioned in different heights and/or angles in order to ensure that the outlet from the ejector 5 is positioned above the surface level 19.

A suction hose 6 is attached to a connector 23 on the ejector 5 for addition of acid from an acid storage container 9 to the ejector 5. The suction hose 6 comprises a suction tip 10 which is inserted into the acid storage container 9. When manure is pumped through the ejector 5, the construction of the ejector 5 ensures that acid is sucked from the acid storage container 9 into the ejector 5 and into the flow of manure passing through the ejector 5 by the suction effect. A stop valve 11 is provided in connection with the suction tip 10 to stop the acid from flowing into the ejector 5 of the manure pumping arrangement P, and into the flow of manure. In addition, the suction hose comprises a shut-off valve 8, for temporarily breaking the siphon effect in the suction hose 6 are provided along the suction hose 6. The suction hose 6 also comprises a non-return valve 7 for preventing backflow of acid and/or manure from the ejector 5 and into the acid storage tank 9. The non-return valve 7 is preferably positioned between the ejector 5 and the shut-off valve 8.

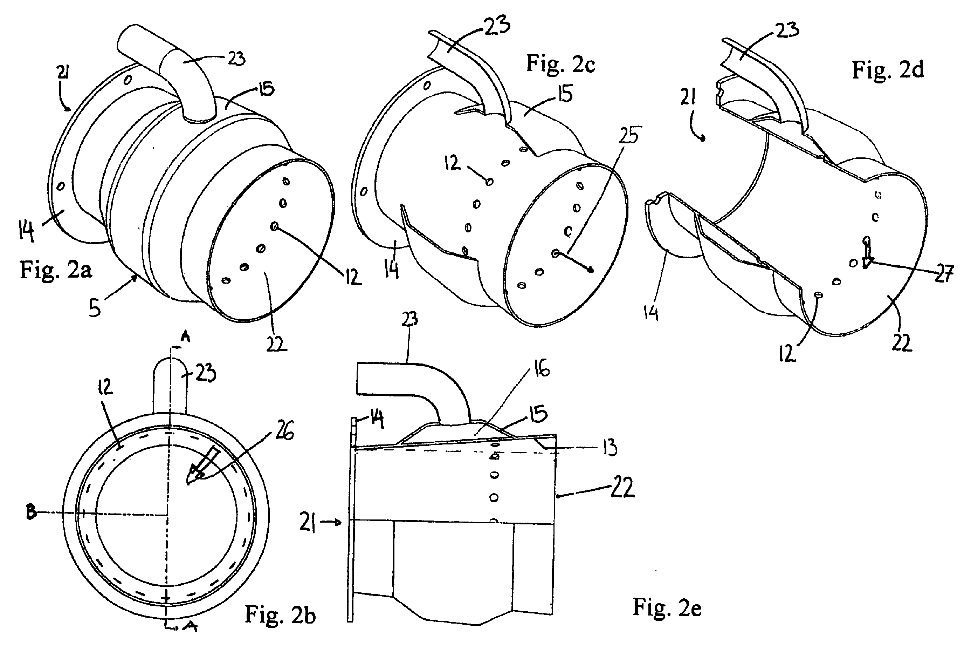

One embodiment of the ejector 5 of the manure pumping arrangement P is shown in figs. 2a-2e. The ejector 5 is attached to the nozzle 4 by means of a flange 14. The flange surrounds the inlet opening 21 of the ejector 5. An outlet opening 22 is arranged in axial direction at a distance from the inlet opening 21. The diameter of the outlet opening 22 is larger than the diameter of the inlet opening and a conical inner ejector part 13 extends between the inlet opening 21 and the outlet opening 22 of the ejector 5. The cross view of the inner ejector part 13 is preferably circular. Alternatively the cross view may be oval or polygonal, e.g. square, rectangular, hexagonal or the like, which will result in an oval cone or a truncated pyramidal shape of the inner ejector part 13, but may be mentioned as conical when describing the ejector 5 in detail.

The conical shape thus provides a gradually increasing diameter in the flow channel and thereby a gradual reduction of the pressure in the manure flowing through the ejector 5.

An outer wall 15 surrounds the outer surface of the conical ejector part 13 and provides a void space 16 surrounding the outer surface of the conical ejector part 13. A connector 23 for the suction hose 6 is connected to this void space 16 for the acid to flow into the void space 16. The acid is then sucked into the manure flowing through the conical ejector part 13 though openings 12.

The openings/holes 12 are shown in figs. 2a-e as circular openings in the conical part 13. The openings/holes 12 may also be oval or in another suitable shape, e.g. rectangular holes arranged in substantially axial direction in the conical ejector part 13, i.e. approximately in parallel to the longitudinal axis of the ejector 5. Alternatively, rectangular openings/holes 12 are provided perpendicular to the substantially axial manure flow direction in the conical ejector part 13. Preferably, the openings/holes 12 are arranged at approximately the same distance from the outlet opening 22 or the inlet opening 21 in the conical ejector part 13 and will thus describe a circle around the inner side of the conical ejector part 13. Such holes or openings 12 will provide a flow of acid, which enters the manure in substantially radial direction, i.e. approximately perpendicular in relation to the inner surface of the conical ejector part 13 as illustrated by the arrow 26 in fig. 2b.

Alternatively, the openings/holes 12 may be provided at an angle relative to the inner surface of the conical ejector part 13, which results in an inflow of acid which enters the manure in substantial axial direction and substantially parallel to the inner surface of the conical ejector part 13 as indicated by arrow 25 in fig. 2c, or at an angle in the interval between the radial direction as indicated by the arrow 26 and the parallel direction as indicated by the arrow 25 in fig. 2c.

In addition, the perforations/holes 12 may provide an inflow which is angled in respect of axial direction, as indicated by the arrow 27 in fig. 2d, which will create a vortex like flow in the conical ejector part 13. This vortex like flow may increase mixing of acid and manure in the ejector 5 even further before the manure-acid mixture exits the ejector 5 and re-enters the manure storage tank 1 as indicated by the manure jet 28 in fig. 1b.

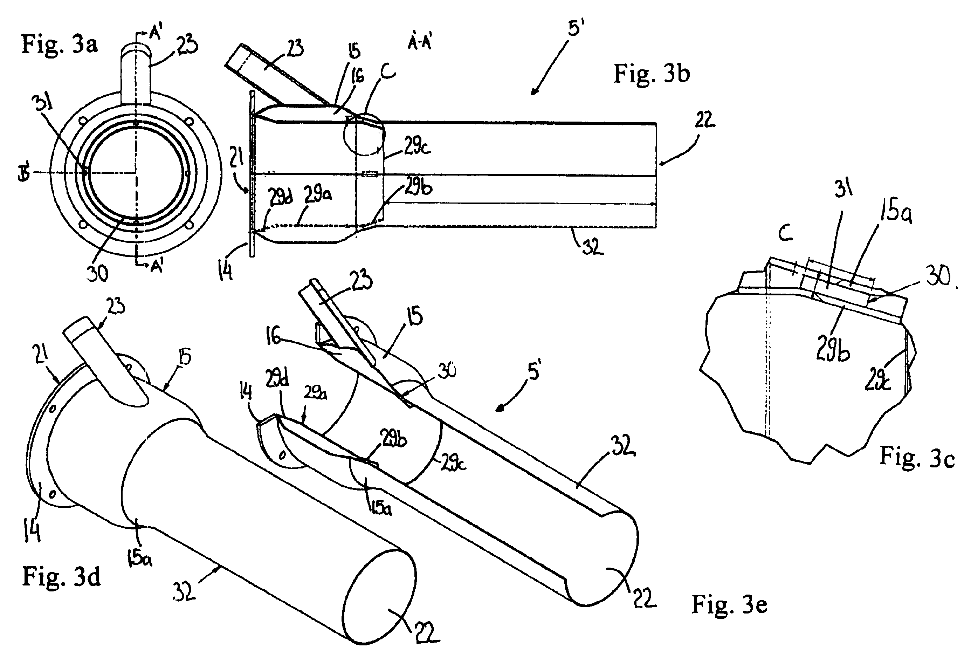

An alternative embodiment of the ejector 5' in the manure pumping arrangement P is shown in figs. 3a-3e. The inner ejector part 29 comprises a cylindrical or a substantially cylindrical wall 29a. Alternatively the cross view may be oval or polygonal, e.g. square, rectangular, hexagonal or the like, which will result in an oval cylindrical or a prism like shape of the inner ejector part 29a, but will be mentioned as cylindrical when describing the ejector 5' in detail. An inwardly tapering conical wall part 29b ends in an edge 29c facing towards the outlet end 22' of the ejector 5'. Optionally the inlet end 29d of the inner ejector part 29a may be tapered inwardly from the flange 14 to towards the cylindrical wall 29a. The outer wall 15 of the ejector 5' ends in a cylindrical or substantially cylindrical ejector tip 32 with an outlet opening 22'. As can be seen in the detailed view in fig. 3c, the transition area 15a between the outer wall and the ejector tip 32 extends in parallel to the inwardly tapering wall part 29b in the first part hereof. The inner ejector wall 29, and especially the inwardly tapering wall part 29b and the edge 29c of the inner ejector part 29 extends into the cylindrical ejector tip 32 to provide an annual gap 30 between the inwardly tapering part 29b and the transition area 15a. The annual gap 30 is provided with spacer blocks 31 arranged at substantially equal distance around the circumference of the annual gap 30 in order to ensure correct position of the inner ejector part 29 and the outer wall 15. In practice, a number of 3-8 spacer blocks 31 are sufficient to ensure correct positioning. The void space 16 and the tube connector 23 are of similar construction as described above.

The annual gap 30 provides the opening between the void space 16 and the interior of the ejector 5' through which acid is sucked from the void space 16 and into the cylindrical ejector tip 32 where it is mixed with the manure flowing through the ejector 5'. When the manure flows through the inner ejector part 29 the pressure increases slightly when the manure passes through the inwardly tapering part 29b. Then, upon passing the edge 29c, the volume available to the manure in the ejector tip 32 is expanded in relation to the volume available in the area of the tapered part 29b, which results in a sudden pressure drop in the flowing manure. This pressure drop is responsible for sucking acid from the void space 16 and into the ejector tip 32 in which it is mixed thoroughly into the manure.

The acid system described above provides means for a method for easy and reliable addition of acid into manure stored in a manure storage tank. When installing the mobile (or stationary) acid addition pumping arrangement the inlet 17 of the manure pump 3 is positioned near the bottom of the manure storage tank 1 and the ejector 5, 5' and the outlet opening 22, 22' is preferably positioned above the manure surface level 19, or near the surface of the of the manure in the manure storage tank 1. When the pumping means of the pumping arrangement is started, the manure is pumped from the bottom of the manure storage tank 1, from the inlet 17 through the pipe or tube 20, the nozzle 4 and ejector 5, 5' and is ejected above the surface of the level 19 in the manure storage tank.

A vacuum arises in the suction hose 6 when the pumping arrangement 3 is started due to the construction of the ejector 5, 5' as described above. Hereby acid is sucked from the acid storage means 9 through the suction hose 6 and into the void space 16 in the ejector 5, 5'. From here the acid is sucked into the manure flowing through the ejector 5, 5' via holes or openings 12, or the annual gap 30 and is mixed throrougly into the flowing manure. Instantly upon mixing of acid and manure an acidification of the manure occurs. The acidification of the manure provided in the present method using the pumping arrangement P with the ejector 5, 5' will occur in controlled manner without any substantial risk of the reactions between the manure and the acid becoming out of control since acidification and the resulting chemical reactions of the manure only occurs after the manure has been pumped through the ejector.

In addition, since the acid is added to the manure without applying any pressure to the acid, there is a reduced risk of damages to items surroundings or injuries to the operator in case of an accident caused by defects in the acid addition equipment of the system.

When acid is injected into the manure in the ejector 5, 5' of the manure pumping arrangement P, the acidification according to the present method results in a significant amount of foam being created in the manure. The ejector 5, 5' does at the same time ensure that the amount of foam created during acidification is kept at a controllable level.

The creation of foam in the manure when passing through the ejector and when ejected into the manure storage tank 1 results in a manure fraction of a lower density when compared to the untreated manure. Thus, the acidified manure will tend to create a layer on top of the untreated manure when it is returned to the manure storage tank 1. Thus, the pumping arrangement P will pump untreated manure into the manure pumping arrangement P for mixing with acid until the entire volume of manure has been treated in the acidification process. Hereby, the entire body of manure present in the manure storage tank is treated by acidification in a very uniform manner. In addition treated and untreated manure are not mixed in the manure storage tank 1, but will be present in two separate layers in the same storage tank 1. Thus, the effect of the pump 3 in the pumping arrangement P is not influenced by any changes in density of the manure pumped there through.

The foam thus created will also provide a protective layer on top of the surface level 19 in the manure storage tank, which will reduce escape of volatile nitrogen compounds, e.g. ammonia, to the surroundings.

In addition, the system and the method provides easy and reliable acidification treatment of manure occurring in a controllable manner without using any pumps or advanced controlling equipment such as pH sensors, controllers etc.

As mentioned above, the pumping arrangement 3 may be stationary or a mobile system. A mobile system may be transported to each manure storage tank 1 shortly before the manure stored herein is to spread in the fields. Addition of acid requires, for safety reasons, specially trained operators. Thus, the use of mobile systems, which can be moved from one manure storage tank to another, e.g. by trained operators, can provide acidification to a large number of manure storage tanks at low costs. In addition, a farmer can request acidification of manure in his storage tank 1, and the no longer needs to be trained in handling strong acids himself. In Addition, spreading of acidified manure no longer requires manure spreaders with individual acid addition systems and thus, different types of manure spreaders can be used simultaneously.

Systems for spreading manure which are connected directly to the manure storage tank using tubes or hoses can now be used for uninterrupted spreading of the treated (acidified) manure present in the manure storage tank 1. In addition the conventional manure spreading systems can be used for spreading the acidified manure without requiring any reconstruction or retrofitting by installing acid addition systems on the equipment.

Acidification of the manure present in the manure storage tank is preferably performed relatively shortly before spreading in the fields. Therefore, the pH value in the treated manure will be optimal in respect of reducing evaporation of the volatile nitrogen compounds.

If a suitable manure pump is already available to a farmer, the ejector part 5,5' the suction hose 6, including the suction tip 10 and the above described valves can be provided as a kit for retrofitting of the available manure pumping arrangement to provide acid addition means on the manure pumping.

## Claims

1. An acid injection and manure pumping system (P) for injecting and mixing acid into manure present in a manure storage tank by adding acid to the manure while it is pumped through a pumping system (P), wherein the pumping system (P) comprises an Inlet (17) adapted to be positioned near the bottom of manure storage tank (1) which is connected to a submersible pump (18), the outlet side of the pump housing (18) being connected to an ejector (5, 5'), through which the manure is ejected into the manure storage tank (1), the ejector (5, 5') comprising a void space (16) between an outer ejector wall (15) and an inner ejector part (13, 29a-29c,) which provides a manure flow channel through the ejector (5, 5'), the void space (16) being connected to a suction hose (6) by means of a connector (23), and where annularly arranged openings or holes (12, 30) provide a passage from the void space (16) and through the wall of the inner ejector part (13) or an ejector tip (32) for sucking acid from an acid storage container (9) through a hose (6) and the void space (16) and into the manure flow path in the ejector (5, 5').

2. An acid injection and manure pumping system according to claim 1, wherein an end part of the inner ejector part (29a-29d) extends into the ejector tip (32) attached to an outer ejector wall (15) surrounding the void space (16) by an inwardly tapering transition area (15a) of the outer wall (15).

3. An acid injection and manure pumping system according to claim 1 or 2, wherein the openings in the ejector (5') forms an annular gap (30) between an inwardly tapering part (29b) of the inner ejector part (29) and the transition area (15a) of the outer wall (15).

4. An acid injection and manure pumping system according to claim 1, wherein the ejector (5) comprises an outwardly tapering inner ejector part (13) provided with holes or openings (12) arranged at a distance from an inlet opening (20) of the ejector (5).

5. An acid injection and manure pumping system according to claim 4, wherein the holes or openings (12) are arranged to establish a radial inwardly directed flow (26) of acid or a flow of acid (25), which is parallel to the manure flow direction or at an angle there between.

6. An acid injection and manure pumping system according to any of the claims 1-5, wherein the holes or openings (12) are arranged to establish a flow of acid entering the inner ejector part (13) at an angle in relation to the longitudinal axis of the ejector (5) for establishing a circulating acid flow pattern.

7. An acid injection and manure pumping system according to any of the claims 1-6, wherein the pumping means (18) is driven by a motor or a hydraulic or pneumatic actuator system of a tractor (2) or truck.

8. An acid injection and manure pumping system according to any of the claims 1-7, wherein the pumping system is mobile and mountable on a tractor (2) or truck or is mounted on a trailer.

9. A method for adding acid and mixing acid into manure present in a manure storage container (1), comprising pumping manure through a manure pumping and acid injection system (P) via an inlet (17) arranged near the bottom of the manure storage tank (1) and ejecting the manure into the storage tank (1) above or near the surface level (19) of the manure in the storage tank, wherein acid is injected into the circulating manure while flowing through an ejector (5, 5') mounted on the pumping system by creating a reduction of the pressure in the manure flowing through the ejector (5, 5'), which creates a vacuum in a void space (16) in the ejector (5, 5') and thereby sucking acid from an acid storage container (9), through an acid suction hose (6) and into the void space (16) from which it is injected into the manure flowing through the ejector (5, 5') by means of annularly arranged holes or openings (12, 30) provided in an inner ejector part (13) or an ejector tip (32) and thereby mixing the acid into the manure present in the ejector (5, 5') upon its passage through the ejector (5, 5') before ejecting the manure from the ejector (5, 5') and into the manure storage tank (1) above or near the surface level (19).

10. A method according to claim 9 wherein the acid is added to prior to spreading the manure in the fields.

## Patentansprüche

1. Ein System zur Einspritzung von Säure und zum Pumpen von Gülle (P) zum Einspritzen und Mischen von Säure mit Gülle, die sich in einem Lagertank befindet, indem der Gülle während des Pumpens durch ein Pumpsystem (P) Säure hinzugefügt wird, wobei das Pumpsystem (P) einen Einlass (17) umfasst, der geeignet ist, nahe des Bodens eines Gülletanks (1) positioniert zu werden, der an eine Tauchpumpe (18) angeschlossen ist, wobei der Auslass des Pumpengehäuses (18) an einen Auswerfer (5, 5') angeschlossen ist, durch welchen die Gülle in den Gülletank (1) ausgeworfen wird, wobei der Auswerfer (5, 5') zwischen der äußeren Auswerferwand (15) und einem inneren Auswerferelement (13, 29a-29c) einen leeren Raum (16) umfasst, der einen Güllefließkanal durch den Auswerfer (5, 5') bereitstellt, wo der leere Raum (16) mittels Steckverbindung (23) mit einem Ansaugschlauch (6) verbunden ist und wo ringförmig angeordnete Öffnungen oder Löcher (12, 30) einen Durchgang vom leeren Raum (16) durch die Wand des inneren Auswerferelements (13) oder eine Auswerferdüse (32) zum Ansaugen von Säure aus einem Säurebehälter (9) durch einen Schlauch (6) und den leeren Raum (16) in den Güllefließweg im Auswerfer (5, 5') bilden.

2. Ein System zur Einspritzung von Säure und zum Pumpen von Gülle gemäß Anspruch 1, wobei ein Endbereich des inneren Auswerferelements (29a-29d) sich in die an einer äußeren, den leeren Raum (16) umgebende Auswerferwand (15) befestigten Auswerferdüse (32) über einen innerlich verjüngten Bereich (15a) der äußeren Wand (15) erstreckt.

3. Ein System zur Einspritzung von Säure und zum Pumpen von Gülle gemäß Anspruch 1 oder 2, wobei die Öffnungen im Auswerfer (5') eine ringförmige Lücke (30) zwischen einem sich innerlich verjüngenden Element (29b) des inneren Auswerferelements (29) und dem Übergangsbereich (15a) der Außenwand (15) bilden.

4. Ein System zur Einspritzung von Säure und zum Pumpen von Gülle gemäß Anspruch 1, wobei der Auswerfer (5) ein sich äußerlich verjüngendes inneres Auswerferelement (13) umfasst, welches mit Löchern oder Öffnungen (12) bestückt ist, die in einer Entfernung von der Einlassöffnung (20) des Auswerfers (5) angeordnet sind.

5. Ein System zur Einspritzung von Säure und zum Pumpen von Gülle gemäß Anspruch 4, wobei die Löcher oder Öffnungen (12) angeordnet sind, um einen radialen nach innen gerichteten Fluss (26) der Säure oder einen Säurefluss (25) zu bewirken, der parallel zur Güllefließrichtung oder in einem Winkel dazwischen ist.

6. Ein System zur Einspritzung von Säure und zum Pumpen von Gülle gemäß einem der vorstehenden Ansprüche 1 bis 5, wobei die Löcher oder Öffnungen (12) angeordnet sind, um einen Säurefluss in das innere Auswerferelement (13) in einem Winkel zur Längsachse des Auswerfers (5) zu etablieren, um ein umlaufendes Säureströmungsmuster zu bilden.

7. Ein System zur Einspritzung von Säure und zum Pumpen von Gülle gemäß einem der vorstehenden Ansprüche 1 bis 6, wobei die Pumpmittel (18) von einem Motor oder einem hydraulischen oder pneumatischen Betätigungssystem eines Traktors (2) oder LKW betrieben wird.

8. Ein System zur Einspritzung von Säure und zum Pumpen von Gülle gemäß einem der vorstehenden Ansprüche 1 bis 7, wobei das Pumpsystem mobil und auf einen Traktor (2) oder LKW montierbar ist, oder wobei es auf einem Anhänger montiert ist.

9. Ein Verfahren zur Einspritzung von Säure und zum Pumpen von Gülle in einem Lagertank (1), indem der Gülle während des Pumpens durch ein System zum Pumpen von Gülle und zur Einspritzung von Säure (P) Säure hinzugefügt wird, und zwar über einen Einlass (17) nahe am Boden des Gülletanks (1) positioniert zu werden und zum Auswerfen der Gülle in den Tank (1) über oder nahe über dem Pegel (19) der Gülle im Tank, wobei die Säure in die umlaufende Gülle eingespritzt wird, während sie durch einen Auswerfer (5, 5') fließt, der am Pumpsystem angeschlossen ist und in der durch den Auswerfer (5, 5') fließenden Gülle eine Druckreduzierung schafft, in einem leeren Raum in dem Auswerfer (5, 5') Saugluft schafft und dadurch über einen Säureschlauch (6) Säure aus einem Säuretank (9) in einen leeren Raum (16) ansaugt, aus dem sie in die durch den Auswerfer (5, 5') fließende Gülle über ringförmig angeordnete Öffnungen oder Löcher (12, 30) in einem inneren Auswerferelement (13) oder einer Auswerferdüse (32) eingespritzt wird, und dadurch die Säure mit der im Auswerfer (5, 5') präsenten Gülle bei deren Durchgang durch den Auswerfer (5, 5') mischt, bevor die Gülle aus dem Auswerfer (5, 5') in den Güllenlagertank (1) über oder nahe dem Oberflächenniveau (19) ausgeworfen wird.

10. Ein Verfahren gemäß Anspruch 9, wobei die Säure vor dem Verteilen der Gülle auf den Feldern hinzugefügt wird.

## Revendications

1. Système de pompage de fumier et d'injection d'acide (P) pour injecter et mélanger de l'acide dans du fumier présent dans un réservoir de stockage de fumier en ajoutant de l'acide au fumier tandis qu'il est pompé par un système de pompage (P), dans lequel le système de pompage (P) comprend une admission (17) conçue pour être positionnée près du fond du réservoir de stockage de fumier (1) qui est relié à une pompe submersible (18), le côté sortie du logement de pompe (18) étant relié à un éjecteur (5, 5'), à travers lequel le fumier est éjecté dans le réservoir de stockage de fumier (1), l'éjecteur (5, 5') comprenant un espace vide (16) entre une paroi d'éjecteur extérieure (15) et une partie d'éjecteur intérieure (13, 29a-29c) qui définit un canal d'écoulement de fumier à travers l'éjecteur (5, 5'), l'espace vide (16) étant relié à un tuyau d'aspiration (6) au moyen d'un connecteur (23), et où des ouvertures ou des trous (12, 30) agencés de façon annulaire définissent un passage à partir de l'espace vide (16) et à travers la paroi de la partie d'éjecteur intérieure (13) ou un embout d'éjecteur (32) pour aspirer de l'acide provenant d'un conteneur de stockage d'acide (9) à travers un tuyau (6) et l'espace vide (16) et dans le chemin d'écoulement de fumier dans l'éjecteur (5, 5').

2. Système de pompage de fumier et d'injection d'acide selon la revendication 1, dans lequel une partie d'extrémité de la partie d'éjecteur intérieure (29a-29d) s'étend dans l'embout d'éjecteur (32) attaché à une paroi d'éjecteur extérieure (15) entourant l'espace vide (16) par une zone de transition allant en s'amincissant vers l'intérieur (15a) de la paroi extérieure (15).

3. Système de pompage de fumier et d'injection d'acide selon la revendication 1 ou 2, dans lequel les ouvertures dans l'éjecteur (5') forment un espacement annulaire (30) entre une partie allant en s'amincissant vers l'intérieur (29b) de la partie d'éjecteur intérieure (29) et la zone de transition (15a) de la paroi extérieure (15).

4. Système de pompage de fumier et d'injection d'acide selon la revendication 1, dans lequel l'éjecteur (5) comprend une partie d'éjecteur intérieure allant en s'amincissant vers l'extérieur (13) munie de trous ou d'ouvertures (12) agencés à une certaine distance d'une ouverture d'admission (20) de l'éjecteur (5).

5. Système de pompage de fumier et d'injection d'acide selon la revendication 4, dans lequel les trous ou ouvertures (12) sont agencés pour établir un écoulement radial dirigé vers l'intérieur (26) d'acide ou un écoulement d'acide (25), qui est parallèle au sens d'écoulement de fumier ou à un certain angle entre eux.

6. Système de pompage de fumier et d'injection d'acide selon l'une quelconque des revendications 1 à 5, dans lequel les trous ou ouvertures (12) sont agencés pour établir un écoulement d'acide entrant dans la partie d'éjecteur intérieure (13) à un certain angle par rapport à l'axe longitudinal de l'éjecteur (5) pour établir un modèle d'écoulement d'acide circulant.

7. Système de pompage de fumier et d' injection d'acide selon l'une quelconque des revendications 1 à 6, dans lequel le moyen de pompage (18) est entraîné par un moteur ou un système d'actionnement hydraulique ou pneumatique d'un tracteur (2) ou camion.

8. Système de pompage de fumier et d'infection d'acide selon l'une quelconque des revendications 1 à 7, dans lequel le système de pompage est mobile et peut être monté sur un tracteur (2) ou camion ou est monté sur une remorque.

9. Procédé pour ajouter de l'acide et mélanger l'acide dans du fumier présent dans un conteneur de stockage de fumier (1), comprenant le pompage de fumier à travers un système de pompage de fumier et d'injection d'acide (P) via une admission (17) agencée près du fond du réservoir de stockage de fumier (1) et l'éjection du fumier dans le réservoir de stockage (1) au-dessus ou près du niveau de surface (19) du fumier dans le réservoir de stockage, dans lequel de l'acide est injecté dans le fumier circulant tout en s'écoulant à travers un éjecteur (5, 5') monté sur le système de pompage en créant une réduction de la pression dans le fumier s'écoulant à travers l'éjecteur (5, 5'), ce qui crée un vide dans un espace vide (16) dans l'éjecteur (5, 5') et aspirant de ce fait de l'acide à partir d'un conteneur de stockage d'acide (9), à travers un tuyau d'aspiration d'acide (6) et dans l'espace vide (16) à partir duquel il est injecté dans le fumier s'écoulant à travers l'éjecteur (5, 5') au moyen de trous ou d'ouvertures (12, 30) agencés de façon annulaire définis dans une partie d'éjecteur intérieure (13) ou un embout d'éjecteur (32) et mélangeant de ce fait l'acide dans le fumier présent dans l'éjecteur (5, 5') lors de son passage à travers l'éjecteur (5, 5') avant l'éjection du fumier à partir de l'éjecteur (5, 5') et dans le réservoir de stockage de fumier (1) au-dessus ou près du niveau de surface (19).

10. Procédé selon la revendication 9, dans lequel l'acide est ajouté avant d'épandre le fumier dans les champs.
